# EUROPEAN PATENT APPLICATION

(11) **EP 4 539 277 A1**
(43) Date of publication of application: **16.04.2025**
(21) Application number: 23203556.8
(22) Date of filing: 13.10.2023
(51) Int. Cl.: H02B 1/56, H02G 5/10

(54) **SWITCHGEAR**

(71) Applicant: ABB SCHWEIZ AG, 5400 Baden (CH)
(72) Inventor: NOVAK, Ondrej, 691 06 Velké Pavlovice (CZ); KOPP, Dalibor, 613 00 Brno (CZ)
(74) Representative: Maiwald GmbH

(57) **Abstract**

The present invention relates to a low voltage, medium voltage or high voltage switchgear, comprising:
- a first component (10); and
- an air guide structure comprising a plurality of guiding vanes (30, 40, 50, 60);
wherein the plurality of guiding vanes are located adjacent to the first component; and
wherein one or more of the plurality of guiding vanes are configured to direct air to enter the air guide structure at an entrance then flow tangentially to a first surface of the first component and then leave the air guide structure at an exit.

## Description

### FIELD OF THE INVENTION

The present invention relates to improved cooling of components in a low voltage, medium voltage or high voltage switchgear.

### BACKGROUND OF THE INVENTION

In the low, medium and high voltage applications, components that carry current such as busbars heat up due to the passage of electrical current via Joule heating.

These hot components must be cooled.

A significant percentage of the cooling is sought to be achieved by air flowing over a surface of a hot component. Therefore, the ability to cool component is directly dependent upon the quantity and quality of the air flowing around the components.

In many cases hot components are not ideally positioned relative to an airflow vector in a given location, causing flow separation. Such a phenomenon causes airflow to circulate around hot parts or to avoid a hot component completely, negatively affecting the cooling performance.

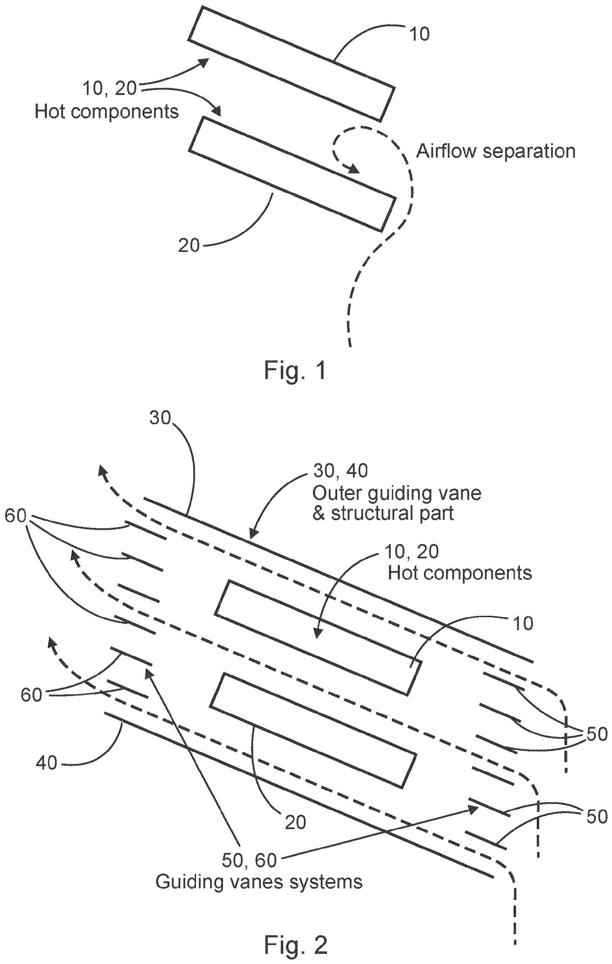

Fig. 1 shows an example of how air cannot follow an abrupt change in direction forced by a hot component, leading to flow separation. Such separation causes boundary layer detachment, formation of reverse flow and recirculation, decreasing cooling ability of air. In Fig. 1 the two hot components are busbars 10, 20 separated by air, but the rising air does not flow between the two hot components, with airflow separation occurring and leading to inefficient air based cooling.

In most cases the shape of such components cannot be easily modified, because the components often have shapes that serve purposes other than a shape that would be more optimum for cooling.

There is a need to address these problems.

### SUMMARY OF THE INVENTION

Therefore, it would be advantageous to have an improved ability to cool hot components in a switchgear using air.

The object of the present invention is solved with the subject matter of the independent claims, wherein further embodiments are incorporated in the dependent claims.

In a first aspect, there is provided a low voltage, medium voltage or high voltage switchgear, comprising:
- a first component; and
- an air guide structure comprising a plurality of guiding vanes.
The plurality of guiding vanes are located adjacent to the first component. One or more of the plurality of guiding vanes are configured to direct air to enter the air guide structure at an entrance then flow tangentially to a first surface of the first component and then leave the air guide structure at an exit.

In an example, the first component is a busbar.

In an example, the first component is not oriented horizontally or vertically, but is at an angle.

In an example, one or more of the plurality of guiding vanes are parallel to the first surface of the first component.

In an example, the first surface of the first component is flat.

In an example, one or more of the plurality of guiding vanes are configured to direct air to enter the air guide structure at the entrance then flow tangentially to a second surface of the first component and then leave the air guide structure at the exit.

In an example, the second surface of the first component is flat.

In an example, the second surface of the first component is parallel to the first surface of the first component.

In an example, one or more of the plurality of guiding vanes are parallel to the second surface of the first component.

In an example, switchgear comprises:
- a second component.
The second component is adjacent to the first component. The plurality of guiding vanes are located adjacent to the second component. One or more of the plurality of guiding vanes are configured to direct air to enter the air guide structure at the entrance then flow tangentially to a first surface of the second component and then leave the air guide structure at the exit.

In an example, the second component is a busbar.

In an example, the first component is adjacent to and parallel to the second component, for example two busbars one above the other with an air gap between them.

In an example, the second component is not oriented horizontally or vertically, but is at an angle.

In an example, one or more of the plurality of guiding vanes are parallel to the first surface of the second component.

In an example, the first surface of the second component is flat.

In an example, one or more of the plurality of guiding vanes are configured to direct air to enter the air guide structure at the entrance then flow tangentially to a second surface of the second component and then leave the air guide structure at the exit.

In an example, the second surface of the second component is flat.

In an example, the second surface of the second component is parallel to the first surface of the first component.

In an example, one or more of the plurality of guiding vanes are parallel to the second surface of the second component.

In an example, the second component is parallel to the first component;
In an example, the plurality of guiding vanes comprises an upper outer guiding vane located above the first component, and the upper outer guiding vane extends from the entrance of the guide structure to the exit of the air guide structure.

In an example, the upper outer guiding vane is located above the second component.

In an example, the plurality of guiding vanes comprises a lower outer guiding vane located below the first component, and the lower outer guiding vane extends from the entrance of the guide structure to the exit of the air guide structure.

In an example, the lower outer guiding vane is located below the second component.

In an example, the plurality of guiding vanes comprises one or more front guiding vanes located at the entrance of the air guide structure.

In an example, the one or more front guiding vanes comprises a plurality of front guiding vanes, and a honey comb structure is formed at least in part from the plurality of front guiding vanes.

In an example, the plurality of guiding vanes comprises one or more rear guiding vanes located at the exit of the air guide structure.

In an example, the one or more rear guiding vanes comprises a plurality of rear guiding vanes, and a honey comb structure is formed at least in part from the plurality of rear guiding vanes.

In an example, one or more of the plurality of guiding vanes are flat plates.

In an example, one or more of the plurality of guiding vanes are airfoils.

In an example, the airfoils are non-cambered airfoils.

In an example, the airfoils are heavily-cambered airfoils.

In an example, the plurality of guiding vanes are formed from an insulating material.

In an example, the plurality of guiding vanes are formed from plastic.

The above aspect and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a representation of airflow around hot components and airflow separation; and
Fig. 2 shows a representation of a new air guiding structure located around hot components.

### DETAILED DESCRIPTION OF EMBODIMENTS

Fig. 2 relates to a new air guiding structure that is located around one or more hot components in a compartment of a switchgear.

An exemplar new low voltage, medium voltage or high voltage switchgear comprises:
- a first component 10; and
- an air guide structure comprising a plurality of guiding vanes 30, 40, 50, 60.
The plurality of guiding vanes are located adjacent to the first component. One or more of the plurality of guiding vanes are configured to direct air to enter the air guide structure at an entrance then flow tangentially to a first surface of the first component and then leave the air guide structure at an exit.

In an example, the first component is a busbar.

In an example, the first component is not oriented horizontally or vertically, but is at an angle.

In an example, one or more of the plurality of guiding vanes are parallel to the first surface of the first component.

In an example, the first surface of the first component is flat.

In an example, one or more of the plurality of guiding vanes are configured to direct air to enter the air guide structure at the entrance then flow tangentially to a second surface of the first component and then leave the air guide structure at the exit.

In an example, the second surface of the first component is flat.

In an example, the second surface of the first component is parallel to the first surface of the first component.

In an example, one or more of the plurality of guiding vanes are parallel to the second surface of the first component.

In an example, switchgear comprises:
- a second component 20.
The second component is adjacent to the first component. The plurality of guiding vanes are located adjacent to the second component. One or more of the plurality of guiding vanes are configured to direct air to enter the air guide structure at the entrance then flow tangentially to a first surface of the second component and then leave the air guide structure at the exit.

In an example, the second component is a busbar.

In an example, the first component is adjacent to and parallel to the second component, for example two busbars one above the other with an air gap between them.

In an example, the second component is not oriented horizontally or vertically, but is at an angle.

In an example, one or more of the plurality of guiding vanes are parallel to the first surface of the second component.

In an example, the first surface of the second component is flat.

In an example, one or more of the plurality of guiding vanes are configured to direct air to enter the air guide structure at the entrance then flow tangentially to a second surface of the second component and then leave the air guide structure at the exit.

In an example, the second surface of the second component is flat.

In an example, the second surface of the second component is parallel to the first surface of the first component.

In an example, one or more of the plurality of guiding vanes are parallel to the second surface of the second component.

In an example, the second component is parallel to the first component;

In an example, the plurality of guiding vanes comprises an upper outer guiding vane 30 located above the first component, and the upper outer guiding vane extends from the entrance of the guide structure to the exit of the air guide structure.

In an example, the upper outer guiding vane is located above the second component.

In an example, the plurality of guiding vanes comprises a lower outer guiding vane 40 located below the first component, and the lower outer guiding vane extends from the entrance of the guide structure to the exit of the air guide structure.

In an example, the lower outer guiding vane is located below the second component.

In an example, the plurality of guiding vanes comprises one or more front guiding vanes 50 located at the entrance of the air guide structure.

In an example, the one or more front guiding vanes comprises a plurality of front guiding vanes, and a honey comb structure is formed at least in part from the plurality of front guiding vanes.

In an example, the plurality of guiding vanes comprises one or more rear guiding vanes 60 located at the exit of the air guide structure.

In an example, the one or more rear guiding vanes comprises a plurality of rear guiding vanes, and a honey comb structure is formed at least in part from the plurality of rear guiding vanes.

In an example, one or more of the plurality of guiding vanes are flat plates.

In an example, one or more of the plurality of guiding vanes are airfoils.

In an example, the airfoils are non-cambered airfoils.

In an example, the airfoils are heavily-cambered airfoils.

In an example, the plurality of guiding vanes are formed from an insulating material.

In an example, the plurality of guiding vanes are formed from plastic.

In an example, the air directed into the air guide structure come from outside of a compartment within which the components to be cooled are located and is directed out of the compartment after passing through the air guide structure. Thus, not only are the hot components cooled, but the interior of the compartment as a whole is cooled.

Thus, the new development provides for improved cooling of components inside a busbar space of low, medium or high-voltage applications.

Conductors inside the switchgear generate heat when conducting current, and the new development provides for improved air cooling of these components.

In particular, the conducting parts in a busbar compartment in a traditional switchgear design are relatively difficult to cool because of their shape and position inside the busbar compartment. Their shape often causes flow separation that decreases the cooling ability. The shape of the busbar compartment itself causes major flow separations, flow oscillations and disrupts steady flow of air and thus reducing cooling even further. However, the new development enables the busbars to be cooled by air.

The new development relates to the use of a system of guiding vanes inside an aerodynamic cover. Such a system corrects an air velocity vector to make it become tangential to a hot component surface and forces air to efficiently utilize the surface of hot part to maximize cooling.

The aerodynamic cover is formed in part from upper 30 and lower 40 guiding vanes, and the vanes inside this cover are guiding vanes 50 at the front of the cover and guiding vanes 60 at the rear of the cover.

The inner guiding vanes 50, 60 are optimized to effectively correct the airflow velocity vector, but their shape can vary from simple flat plates, non-cambered airfoils to heavily cambered airfoils. The inner guiding vanes 50, 60 can also be oriented into a honeycomb shaped system to boost structural strength. It is good practice to also create fillets on the leading and trailing edges of the inner vanes and the outer vanes.

Thus, through the new development cooling effectiveness can be significantly improved by adding air flow guiding vane system onto existing busbar designs to guide air to flow with low angle of attack relative to conductors in the busbar compartment.

In a specific embodiment, a system of outer and inner guiding vanes are attached to and/or spaced around hot components in the busbar compartment. These guiding vanes correct the air flow vector and prevent air flow separation. This system also promotes steady air flow into and out of the busbar compartment. Subsequent improvement in cooling allows designers to use less of expansive materials like copper, providing significant economical benefit.

It is also good practice to create the system from plastic or another insulating material, in order to avoid di-electric phenomena.

The improved cooling means that components, such as busbars, can be made from less copper, providing economic advantages.

### Reference Numerals

- 10: First hot component - e.g. busbar
- 20: Second hot component - e.g. busbar
- 30: Upper outer guiding vane
- 40: Lower outer guiding vane
- 50: Front guiding vanes
- 60: Front guiding vanes

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A low voltage, medium voltage or high voltage switchgear, comprising:
- a first component (10); and
- an air guide structure comprising a plurality of guiding vanes (30, 40, 50, 60);
wherein the plurality of guiding vanes are located adjacent to the first component; and
wherein one or more of the plurality of guiding vanes are configured to direct air to enter the air guide structure at an entrance then flow tangentially to a first surface of the first component and then leave the air guide structure at an exit.

2. Switchgear according to claim 1, wherein the first surface of the first component is flat.

3. Switchgear according to any of claims 1-2, the switchgear comprising:
- a second component (20);
wherein the second component is adjacent to the first component;
wherein the plurality of guiding vanes are located adjacent to the second component; and
wherein one or more of the plurality of guiding vanes are configured to direct air to enter the air guide structure at the entrance then flow tangentially to a first surface of the second component and then leave the air guide structure at the exit.

4. Switchgear according to claim 3, wherein the first surface of the second component is flat.

5. Switchgear according to any of claims 3-4, wherein the second component is parallel to the first component;

6. Switchgear according to any of claims 1-5, wherein the plurality of guiding vanes comprises an upper outer guiding vane (30) located above the first component, and wherein the upper outer guiding vane extends from the entrance of the guide structure to the exit of the air guide structure.

7. Switchgear according to claim 6 when dependent upon any of claims 3-5, wherein the upper outer guiding vane is located above the second component.

8. Switchgear according to any of claims 1-7, wherein the plurality of guiding vanes comprises a lower outer guiding vane (40) located below the first component, and wherein the lower outer guiding vane extends from the entrance of the guide structure to the exit of the air guide structure.

9. Switchgear according to claim 8 when dependent upon any of claims 3-7, wherein the lower outer guiding vane is located below the second component.

10. Switchgear according to any of claims 1-9, wherein the plurality of guiding vanes comprises one or more front guiding vanes (50) located at the entrance of the air guide structure.

11. Switchgear according to claim 10, wherein the one or more front guiding vanes comprises a plurality of front guiding vanes, and wherein a honey comb structure is formed at least in part from the plurality of front guiding vanes.

12. Switchgear according to any of claims 1-11, wherein the plurality of guiding vanes comprises one or more rear guiding vanes (60) located at the exit of the air guide structure.

13. Switchgear according to claim 12, wherein the one or more rear guiding vanes comprises a plurality of rear guiding vanes, and wherein a honey comb structure is formed at least in part from the plurality of rear guiding vanes.

14. Switchgear according to any of claims 1-13, wherein one or more of the plurality of guiding vanes are flat plates.

15. Switchgear according to any of claims 1-14, wherein one or more of the plurality of guiding vanes are airfoils.
